# EUROPEAN PATENT SPECIFICATION

(11) **EP 4 586 433 B1**
(45) Date of publication and mention of the grant of the patent: **12.08.2026**
(21) Application number: 25150887.5
(22) Date of filing: 09.01.2025
(51) Int. Cl.: H02J 3/001, H02J 13/36

(54) **METHOD FOR DEBUGGING PHOTOVOLTAIC SHUTDOWN DEVICE AND RELATED DEVICE**
VERFAHREN ZUR FEHLERBESEITIGUNG BEI EINER FOTOVOLTAISCHEN ABSCHALTVORRICHTUNG UND ZUGEHÖRIGE VORRICHTUNG
PROCÉDÉ DE DÉBOGAGE DE DISPOSITIF D'ARRÊT PHOTOVOLTAÏQUE ET DISPOSITIF ASSOCIÉ

(30) Priority: 12.01.2024 CN 202410052818
(43) Date of publication of application: 16.07.2025
(73) Proprietor: Solax Power Network Technology (Zhejiang) Co., Ltd., Hangzhou, Zhejiang 311500 (CN)
(72) Inventor: WU, Junlei, 311500 Hangzhou (CN); WANG, Gaoshun, 311500 Hangzhou (CN)
(74) Representative: Novagraaf International SA

(56) References cited:
- EP-A2- 4 089 913
- CN-A- 113 131 518
- CN-A- 116 169 948
- US-A1- 2012 316 802
- US-A1- 2021 408 824
- US-A1- 2023 126 969

## Description

### TECHNICAL FIELD

The present application relates to the field of photovoltaic inverter control technologies, and in particular, to a method for debugging a photovoltaic shutdown device and a related device.

### BACKGROUND

A series photovoltaic power generation system is conducive to improving energy conversion efficiency and output power of a system. However, a DC high voltage generated by a photovoltaic component of a series may cause arcing and even a fire, and therefore there are safety risks such as fire accidents. In a related technology, a rapid shutdown (RSD, Rapid Shutdown) is generally configured between a photovoltaic component and an inverter, and is also referred to as a shutdown device. That is, the photovoltaic component is connected in series with the shutdown device and then is connected to the inverter. A main feature of the RSD is that each photovoltaic series can be automatically disconnected in a case of a fault or a manual cutoff on a power grid, thereby reducing a voltage of the photovoltaic series, ensuring no high voltage in a system, reducing risks of electric shocks, and improving practicality and safety of the system.

However, for the shutdown device in the related technology, first, a shutdown function of the shutdown device cannot be determined during installation of the shutdown device (that is, whether the shutdown device can work normally cannot be determined). Second, in the related technology, a plurality of shutdown devices in a photovoltaic power generation system are all controlled by an inverter controller. When a photovoltaic series is faulty, the inverter controller shuts down all the shutdown devices in the photovoltaic power generation system, closes all the shutdown devices after fault maintenance is completed, and runs the photovoltaic power generation system again.

That is, the photovoltaic power generation system in the related technology cannot effectively control each shutdown device, and therefore cannot perform targeted function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system. Currently, there is no effective solution to the foregoing problem existing in the related technology.

Patent application document No. CN116169948A provides a Rapid Shutdown Device (RSD) including: a logic-and-analog circuit; an RSD identification-code (ID) memory, connected to the logic-and-analog circuit, for storing a unique identification code of the RSD; a control-command receiving circuit, connected to the logic-and-analog circuit, for receiving and decoding a control command that includes any combination of: a collective RSD turn-on command, an individual RSD turn-on command, and a to-be-tested RSD identification code; a switching circuit, connected to the logic-and-analog circuit; and a bypass circuit, connected between the two output terminals of the RSD, the bypass circuit being conductive when the switching circuit is OFF. The logic-and-analog circuit, based on a decoding result of the control-command receiving circuit and on the unique identification code stored in the RSD identification-code memory, controls whether to turn the switching circuit ON or OFF; and when the switching circuit is ON, an output voltage of a photovoltaic module coupled to the RSD is delivered through the RSD.

### SUMMARY

Embodiments of the present application provide a method for debugging a photovoltaic shutdown device and a related device, to resolve at least the following problem in the related technology: a photovoltaic power generation system cannot effectively control a shutdown device and cannot perform targeted function debugging on the shutdown device, resulting in a relatively large safety risk, high system maintenance difficulty, and a long maintenance time.

To resolve the foregoing problem, an aspect of embodiments of the present application provides a method for debugging a photovoltaic shutdown device, including:
receiving a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation; and
transmitting a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device.

In some embodiments, the step of broadcasting the binding instruction, to receive a communication address that corresponds to a number of a shutdown device and that is transmitted by the shutdown device in response to the binding instruction includes:
broadcasting the binding instruction through a preset port, so that the shutdown device receives the binding instruction through the preset port, performs a first modulo operation on the number of the shutdown device, to obtain a first modulo value, determines, based on the first modulo value and a communication address list, the communication address corresponding to the number of the shutdown device, and transmits the communication address corresponding to the number of the shutdown device.

In some embodiments, after the step of receiving a communication address that corresponds to a number of a shutdown device and that is transmitted by the shutdown device in response to the binding instruction, the method further includes:
transmitting a successful binding instruction or an unsuccessful binding instruction to the shutdown device, so that:
the shutdown device performs, in response to the successful binding instruction, marking processing on the bound communication address in the communication address list; or
the shutdown device generates, in response to the unsuccessful binding instruction, a random number, performs a second modulo operation on the random number, to obtain a second modulo value, determines, based on the second modulo value and the communication address list, the communication address corresponding to the number of the shutdown device, and transmits the communication address corresponding to the number of the shutdown device.

In some embodiments, the method further includes:
terminating the binding operation when a quantity of times of transmitting a communication address by any shutdown device meets a threshold quantity of times, or a quantity of target shutdown devices in the shutdown device list reaches a threshold quantity of shutdown devices.

In some embodiments, the method is applied to a transmitter, and a threshold quantity of shutdown devices bound to the transmitter is less than or equal to a value of a modulus in a modulo operation.

In some embodiments, the method further includes:
transmitting the shutdown device list and/or the shutdown function debugging result to a client, to display, by using the client, the shutdown device list bound to the transmitter and/or the shutdown function debugging result of the target shutdown device.

In some embodiments, the method further includes:
transmitting a monitoring data acquisition instruction to the target shutdown device in the shutdown device list, to receive monitoring data transmitted by the target shutdown device, and determining, based on the monitoring data, a running status of a photovoltaic component corresponding to the target shutdown device.

To resolve the foregoing problem, another aspect of embodiments of the present application provides an apparatus for debugging a photovoltaic shutdown device, where the apparatus includes a transmitter and a shutdown device, where
the transmitter is configured to: receive a binding instruction, broadcast the binding instruction, to receive a communication address that corresponds to a number of a shutdown device and that is transmitted by the shutdown device in response to the binding instruction, and construct a shutdown device list according to the number of the shutdown device and the corresponding communication address, to complete a shutdown device binding operation; and transmit a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device; and
the shutdown device is configured to: receive the binding instruction broadcast by the transmitter, and transmit, to the transmitter, the communication address corresponding to the number of the shutdown device; and receive the shutdown function debugging instruction transmitted by the transmitter, disconnect from a corresponding photovoltaic component according to the shutdown function debugging instruction, and transmit, to the transmitter, a monitored current value after the disconnection.

To resolve the foregoing problem, still another aspect of embodiments of the present application provides a photovoltaic power generation system, including a processor and a memory storing a program, where the program includes instructions, and the instructions, when being executed by the processor, cause the processor to execute any one of the foregoing methods for debugging a photovoltaic shutdown device.

To resolve the foregoing problem, an aspect of embodiments of the present application provides a non-transitory machine-readable medium storing computer instructions, where the computer instructions are used to cause a computer to execute any one of the foregoing methods for debugging a photovoltaic shutdown device.

Beneficial effects of embodiments of the present application are as follows. The following technical means is used: receiving a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation; and transmitting a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device. This resolves the following technical problems in the related technology: A photovoltaic power generation system cannot effectively control each shutdown device, and therefore cannot perform targeted function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system. The following technical effects are implemented: targeted control and shutdown function debugging of a shutdown device is achieved, thereby reducing safety risks, reducing system maintenance difficulty and a maintenance time, and expanding applicable scenarios of the photovoltaic power generation system.

Details of one or more embodiments of the present application are provided in the drawings and descriptions below to make other features, objectives, and advantages of the present application clearer and more comprehensible.

### BRIEF DESCRIPTION OF THE DRAWINGS

To more clearly illustrate technical solutions in embodiments of the present application or in a conventional technology, a brief introduction to the drawings required for the descriptions of the embodiments or the conventional technology will be provided below. Apparently, the accompanying drawings in the following descriptions are merely some embodiments of the present application. A person of ordinary skill in the art may still derive other embodiments from these accompanying drawings without creative efforts.
FIG. 1 is a schematic flowchart of a method for debugging a photovoltaic shutdown device according to an embodiment of the present application.
FIG. 2 is a schematic flowchart of a method for debugging a photovoltaic shutdown device according to another embodiment of the present application.
FIG. 3 is a schematic diagram of a framework of an apparatus for debugging a photovoltaic shutdown device according to still another embodiment of the present application.
FIG. 4 is a schematic structural diagram of an electronic device according to an embodiment of the present application.

### DETAILED DESCRIPTION OF THE EMBODIMENTS

Embodiments of the present application are described below in detail with reference to the accompanying drawings. Although the accompanying drawings show some embodiments of the present application, it should be understood that the present application may be implemented in various forms, which should not be construed as limited to embodiments herein, but rather these embodiments are provided for a more thorough and complete understanding of the present application.

To reduce safety risks caused by arcing and even a fire generated by a photovoltaic component of a series, in the related technology, the photovoltaic component is generally connected in series with a shutdown RSD and then is connected to an inverter. When a power grid is faulty, all shutdown devices are directly shut down by using a controller, thereby reducing a voltage of the photovoltaic series, ensuring no high voltage in a system, reducing risks of electric shocks, and improving practicality and safety of the system. However, for the shutdown device in the related technology, first, a shutdown function of the shutdown device cannot be determined during installation of the shutdown device (that is, whether the shutdown device can work normally cannot be determined). Second, in the related technology, a plurality of shutdown devices in a photovoltaic power generation system are all controlled by an inverter controller. That is, the photovoltaic power generation system in the related technology cannot effectively control each shutdown device, and therefore cannot perform function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system.

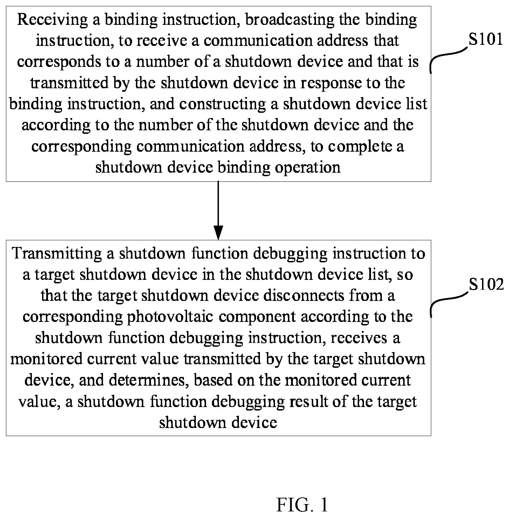

To resolve the foregoing problem, an embodiment of the present application provides a method for debugging a photovoltaic shutdown device, applied to a transmitter. As shown in FIG. 1, the method for debugging a photovoltaic shutdown device mainly includes Step S101 and Step S102.

Step S101: Receiving a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation.

The method for debugging a photovoltaic shutdown device provided in this embodiment of the present application is mainly applied to a transmitter (transmit). Each transmitter may be bound to a plurality of shutdown devices. The transmitter is configured to receive monitoring data (including a temperature, a voltage value, a current value, and the like) transmitted by the shutdown devices and forward the monitoring data to a client corresponding to a photovoltaic power generation system. A running status of a photovoltaic component corresponding to each shutdown device may be more intuitively displayed by using the client. In some embodiments, the binding instruction may be transmitted to the transmitter by using the client, and the transmitter broadcasts a received binding instruction, to receive the communication address that corresponds to the number of the shutdown device and that is returned by the shutdown device in response to the binding instruction. Therefore, binding of a plurality of shutdown devices is completed at the transmitter end, so that effective control and shutdown function debugging are subsequently performed on the shutdown devices that have completed binding. Further, monitoring data of a photovoltaic component corresponding to each shutdown device that has completed binding may be intuitively and accurately learned, thereby facilitating operations such as system maintenance.

In some embodiments, the foregoing step of broadcasting the binding instruction, to receive a communication address that corresponds to a number of a shutdown device and that is transmitted by the shutdown device in response to the binding instruction includes: broadcasting the binding instruction through a preset port, so that the shutdown device receives the binding instruction through the preset port, performs a first modulo operation on the number of the shutdown device, to obtain a first modulo value, determines, based on the first modulo value and a communication address list, the communication address corresponding to the number of the shutdown device, and transmits the communication address corresponding to the number of the shutdown device.

In a modulo operation provided in this embodiment of the present application, a value of a modulus is greater than or equal to a threshold quantity of shutdown devices that may be bound to the transmitter. The shutdown device determines that a communication address corresponding to a case in which a sequence number of a communication address in the communication address list is consistent with the first modulo value is the communication address corresponding to the number of the shutdown device, and transmits both the communication address and the number of the shutdown device to the transmitter end. The transmitter end constructs the shutdown device list according to the communication address and the number of the shutdown device, and records, in the list, the number of the shutdown device that has completed binding and the corresponding communication address.

In some embodiments, after the step of receiving a communication address that corresponds to a number of a shutdown device and that is transmitted by the shutdown device in response to the binding instruction, the method further includes: transmitting a successful binding instruction or an unsuccessful binding instruction to the shutdown device, so that: the shutdown device performs, in response to the successful binding instruction, marking processing on the bound communication address in the communication address list; or the shutdown device generates, in response to the unsuccessful binding instruction, a random number, performs a second modulo operation on the random number, to obtain a second modulo value, determines, based on the second modulo value and the communication address list, the communication address corresponding to the number of the shutdown device, and transmits the communication address corresponding to the number of the shutdown device.

The first modulo operation is performed according to the number of the shutdown device, and finally a plurality of shutdown devices may obtain a same first modulo value. Further, numbers of a plurality of shutdown devices correspond to a same communication address. The transmitter records only information about the first obtained communication address, that is, if it has been recorded in the shutdown device list that a communication address has a corresponding number of a shutdown device, for a number of a shutdown device corresponding to the same communication address that is transmitted later, the transmitter transmits an unsuccessful binding instruction, so that a shutdown device that receives the unsuccessful binding instruction randomly generates a random number, performs a second modulo operation to obtain a second modulo value, re-determines a communication address corresponding to a number of the shutdown device, and transmits the re-determined communication address to the transmitter end to perform a binding operation. Through the foregoing setting, the following case is avoided: a plurality of numbers of shutdown devices correspond to a same communication address, resulting in an exception in a result of subsequent shutdown function debugging, which further improves a targeted control effect and a function debugging effect of a shutdown device.

In some embodiments, the foregoing method further includes: terminating the binding operation when a quantity of times of transmitting a communication address by any shutdown device meets a threshold quantity of times, or a quantity of target shutdown devices in the shutdown device list reaches a threshold quantity of shutdown devices.

Through the foregoing setting, a constraint condition for terminating the binding operation is set, which is conducive to improving function debugging efficiency.

Step S102: Transmitting a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device.

In some embodiments, shutdown devices in the shutdown device list are all shutdown devices that have been successfully bound at the transmitter end. Therefore, a shutdown function debugging instruction may be transmitted to each shutdown device in sequence, or shutdown function debugging instruction may be selectively transmitted to some of the shutdown devices, or shutdown function debugging instructions may be simultaneously transmitted to all the shutdown devices in the shutdown device list. Through the foregoing setting, targeted control of the photovoltaic power generation system on the shutdown devices is improved, targeted function debugging on each shutdown device is implemented, and safety risks are reduced.

In some embodiments, the foregoing method further includes: transmitting the shutdown device list and/or the shutdown function debugging result to the client, to display, by using the client, the shutdown device list bound to the transmitter and/or the shutdown function debugging result of the target shutdown device.

A communication connection is established between the transmitter and the client provided in this embodiment of the present application. The transmitter transmits, to the client, a list of shutdown devices successfully bound to the transmitter and a shutdown function detection result corresponding to the target shutdown device in the shutdown device list. A user or a maintenance person may intuitively learn, by using the client display device, a running status of the bound shutdown devices.

In some embodiments, the foregoing method further includes: transmitting a monitoring data acquisition instruction to the target shutdown device in the shutdown device list, to receive monitoring data transmitted by the target shutdown device, and determining, based on the monitoring data, a running status of a photovoltaic component corresponding to the target shutdown device.

Through the foregoing setting, an operator may intuitively learn, by using the client display device, a running status of photovoltaic components corresponding to the bound shutdown devices. When a photovoltaic component is faulty, a maintenance operation may be performed quickly and accurately, thereby reducing maintenance difficulty and a maintenance time, and further promoting popularization of the photovoltaic power generation system.

The foregoing method for debugging a photovoltaic shutdown device provided in this embodiment of the present application, the following technical means is used: receiving a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation; and transmitting a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device. This resolves the following technical problems in the related technology: A photovoltaic power generation system cannot effectively control each shutdown device, and therefore cannot perform targeted function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system. The following technical effects are implemented: targeted control and shutdown function debugging of a shutdown device is achieved, thereby reducing safety risks, reducing system maintenance difficulty and a maintenance time, and expanding applicable scenarios of the photovoltaic power generation system.

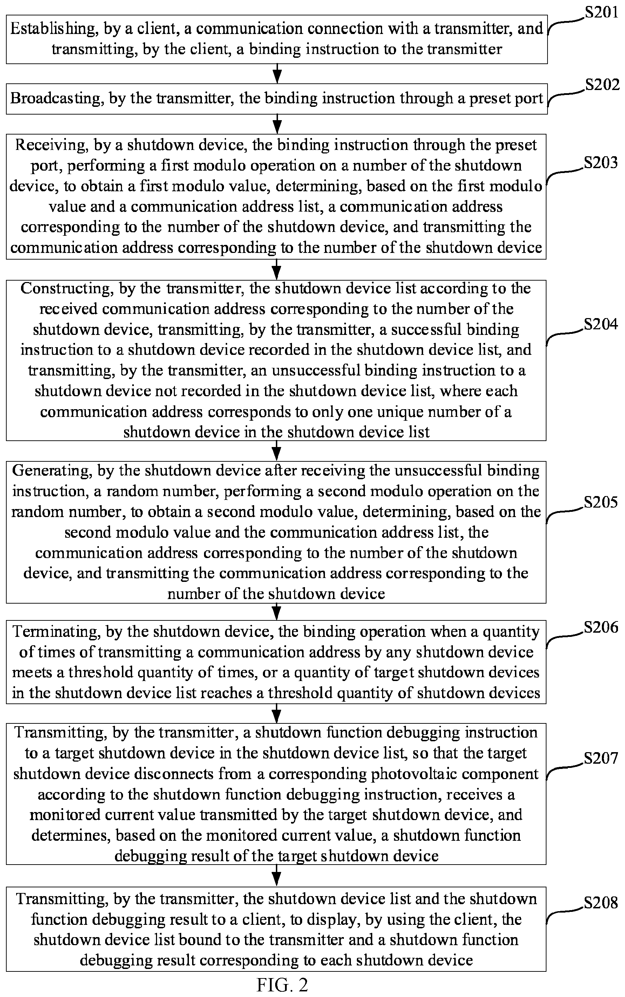

To resolve the foregoing problem, an embodiment of the present application provides another method for debugging a photovoltaic shutdown device, applied to a photovoltaic power generation system. As shown in FIG. 2, the method for debugging a photovoltaic shutdown device mainly includes Step S201 to Step S208.

Step S201: Establishing, by a client, a communication connection with a transmitter, and transmitting, by the client, a binding instruction to the transmitter.

The client provided in this embodiment of the present application refers to a client corresponding to the photovoltaic power generation system. After establishing the communication connection with the transmitter, the client may receive monitoring data that is of a shutdown device bound to the transmitter and that is transmitted by the transmitter. Because the monitoring data is data such as a temperature, a voltage value, and a current value of a photovoltaic component corresponding to the shutdown device, a running status of the photovoltaic component may be intuitively displayed by using the client.

Step S202: Broadcasting, by the transmitter, the binding instruction through a preset port.

In some embodiments, each transmitter may be bound to a plurality of shutdown devices, and the transmitter is configured to receive monitoring data (including a temperature, a voltage value, a current value, and the like) transmitted by the shutdown devices. Therefore, to improve an effect of controlling the shutdown devices, the shutdown devices need to be bound at the transmitter end, so that the transmitter receives corresponding data transmitted by a shutdown device that has been successfully bound.

Step S203: Receiving, by a shutdown device, the binding instruction through the preset port, performing a first modulo operation on a number of the shutdown device, to obtain a first modulo value, determining, based on the first modulo value and a communication address list, a communication address corresponding to the number of the shutdown device, and transmitting the communication address corresponding to the number of the shutdown device.

The number of the shutdown device provided in this embodiment of the present application refers to a unique identifier of the shutdown device, or another identifier number that may represent the shutdown device may be used to perform a modulo operation to determine the communication address corresponding to the shutdown device. In a modulo operation provided in this embodiment of the present application, a value of a modulus is greater than or equal to a threshold quantity of shutdown devices that may be bound to the transmitter. Generally, the transmitter may match a maximum of 255 shutdown devices (a specific value depends on a model of the transmitter). The same communication address list is maintained at both the transmitter end and the shutdown device end. If 300 communication addresses may be set in the communication address list, corresponding communication address numbers are respectively 1 to 300.

In some embodiments, a process of the first modulo operation may be understood as the first addressing process of the shutdown device. After the shutdown device receives the binding instruction through the preset port, the shutdown device performs modulo on 300 (corresponding to a quantity of communication addresses in the communication address list) by using the number of the shutdown device, to obtain the first modulo value. Then, the shutdown device determines that a communication address corresponding to a case in which a sequence number of a communication address in the communication address list is consistent with the first modulo value is the communication address corresponding to the number of the shutdown device, and transmits both the communication address and the number of the shutdown device to the transmitter end. The transmitter end constructs a shutdown device list according to the communication address and the number of the shutdown device, and records, in the list, the number of the shutdown device that has completed binding and the corresponding communication address.

In some embodiments, after the shutdown device determines, based on the number of the shutdown device, the communication address corresponding to the number of the shutdown device, the transmitter may poll each communication address in sequence according to a sequence number of the communication address. The shutdown device whose corresponding communication address is polled transmits the number of the shutdown device and the corresponding communication address to the transmitter, so that the transmitter end performs binding of the shutdown device.

Step S204: Constructing, by the transmitter, the shutdown device list according to the received communication address corresponding to the number of the shutdown device, transmitting, by the transmitter, a successful binding instruction to a shutdown device recorded in the shutdown device list, and transmitting, by the transmitter, an unsuccessful binding instruction to a shutdown device not recorded in the shutdown device list, where each communication address corresponds to only one unique number of a shutdown device in the shutdown device list.

The first modulo operation is performed according to the number of the shutdown device, and finally a plurality of shutdown devices may obtain a same first modulo value. Further, numbers of a plurality of shutdown devices correspond to a same communication address. Therefore, the transmitter records only information about the first obtained communication address, that is, if it has been recorded in the shutdown device list that a communication address has a corresponding number of a shutdown device, for a number of a shutdown device corresponding to the same communication address that is transmitted later, the transmitter transmits an unsuccessful binding instruction. Through the foregoing setting, the following case is avoided: a plurality of numbers of shutdown devices correspond to a same communication address, resulting in an exception in a result of subsequent shutdown function debugging, which further improves a targeted control effect and a function debugging effect of a shutdown device.

In some embodiments, the transmitter and the shutdown device communicate with each other through single-bus half-duplex communication. In this communication manner, only one device is allowed to transmit data at a same instant. Therefore, when the transmitter polls a repeated communication address of a plurality of shutdown devices, a plurality of shutdown devices recover. In this case, data received by the transmitter cannot pass CRC (Cyclic Redundancy Check, cyclic redundancy check). Therefore, the communication address is not recorded in the shutdown device list in this time of polling. After the polling times out, the transmitter performs polling on a sequence number of a next communication address. After the first round of addressing, the transmitter transmits a successful binding instruction and an unsuccessful binding instruction, and a shutdown device that is not successfully bound determines, based on a random number, a communication address corresponding to a number of the shutdown device in the second time of polling (that is, in the second shutdown device addressing process).

Step S205: Generating, by the shutdown device after receiving the unsuccessful binding instruction, a random number, performing a second modulo operation on the random number, to obtain a second modulo value, determining, based on the second modulo value and the communication address list, the communication address corresponding to the number of the shutdown device, and transmitting the communication address corresponding to the number of the shutdown device.

A communication address finally determined by the shutdown device after performing a modulo operation according to the number of the shutdown device is still a communication address that was determined last time and that has been bound to another shutdown device. Therefore, for a shutdown device that is not successfully bound, a random number may be randomly generated first. Then, a second modulo operation is performed according to the random number, to obtain a second modulo value, a communication address corresponding to a number of the shutdown device is re-determined, and the re-determined communication address is transmitted to the transmitter end to perform a binding operation. Through the foregoing setting, each shutdown device can determine a unique communication address, which facilitates subsequent shutdown function debugging of the shutdown device and status detection of a photovoltaic component corresponding to the shutdown device.

Step S206: Terminating, by the shutdown device, the binding operation when a quantity of times of transmitting a communication address by any shutdown device meets a threshold quantity of times, or a quantity of target shutdown devices in the shutdown device list reaches a threshold quantity of shutdown devices.

In some embodiments, according to the foregoing method, the first modulo operation is performed according to the number of the shutdown device, the second modulo operation is performed according to the random number, and there may be a plurality of times of the second modulo operation. After a valid quantity of times, it may be implemented that a sufficient quantity of shutdown devices are bound to the transmitter. Through the foregoing setting, a constraint condition for terminating the binding operation is set, which is conducive to improving function debugging efficiency.

Step S207: Transmitting, by the transmitter, a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device.

In some embodiments, shutdown devices in the shutdown device list are all shutdown devices that have been successfully bound at the transmitter end. Therefore, a shutdown function debugging instruction may be transmitted to each shutdown device in sequence, or shutdown function debugging instruction may be selectively transmitted to some of the shutdown devices, or shutdown function debugging instructions may be simultaneously transmitted to all the shutdown devices in the shutdown device list. Through the foregoing setting, targeted control of the photovoltaic power generation system on the shutdown devices is improved, targeted function debugging on each shutdown device is implemented, and safety risks are reduced.

Step S208: Transmitting, by the transmitter, the shutdown device list and the shutdown function debugging result to a client, to display, by using the client, the shutdown device list bound to the transmitter and a shutdown function debugging result corresponding to each shutdown device.

The transmitter transmits, to the client, a list of shutdown devices successfully bound to the transmitter and a shutdown function detection result corresponding to the target shutdown device in the shutdown device list. A user or a maintenance person may intuitively learn, by using the client display device, a running status of the bound shutdown devices.

In some embodiments, the foregoing method further includes: transmitting a monitoring data acquisition instruction to the target shutdown device in the shutdown device list, to receive monitoring data transmitted by the target shutdown device, and determining, based on the monitoring data, a running status of a photovoltaic component corresponding to the target shutdown device.

In some embodiments, the transmitter may transmit, to a shutdown device bound to the transmitter, a data acquisition instruction within fixed time (which, for example, is set to 5 minutes, this value is not a limitation on the present application, and specific duration may be adjusted according to an actual running status), to receive monitoring data transmitted by the shutdown device. The transmitter may further transmit a data acquisition instruction to a shutdown device in response to a data acquisition request transmitted by the client, to receive monitoring data transmitted by the shutdown device, so that an operator obtains a running status of a photovoltaic component in a timely manner based on the client.

Through the foregoing setting, an operator may intuitively learn, by using the client display device, a running status of photovoltaic components corresponding to the bound shutdown devices. When a photovoltaic component is faulty, a maintenance operation may be performed quickly and accurately, thereby reducing maintenance difficulty and a maintenance time, and further promoting popularization of the photovoltaic power generation system.

The foregoing method for debugging a photovoltaic shutdown device provided in this embodiment of the present application, the following technical means is used: receiving a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation; and transmitting a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device. This resolves the following technical problems in the related technology: A photovoltaic power generation system cannot effectively control each shutdown device, and therefore cannot perform targeted function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system. The following technical effects are implemented: targeted control and shutdown function debugging of a shutdown device is achieved, thereby reducing safety risks, reducing system maintenance difficulty and a maintenance time, and expanding applicable scenarios of the photovoltaic power generation system.

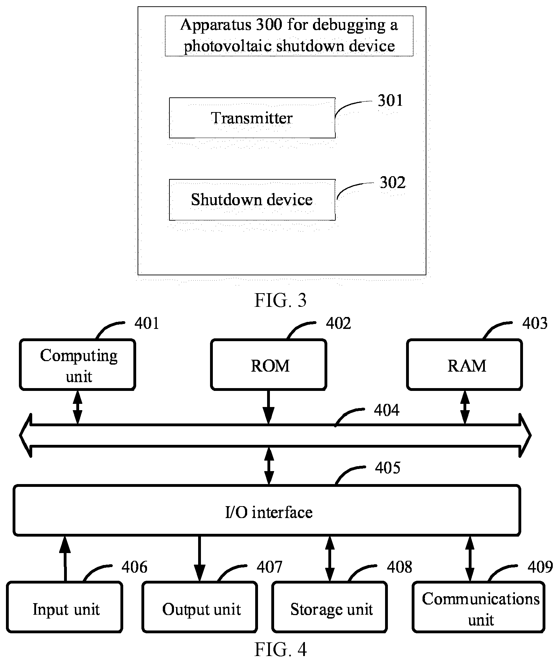

Based on the foregoing methods for debugging a photovoltaic shutdown device provided in embodiments of the present application, referring to FIG. 3, an embodiment of the present application further provides an apparatus for debugging a photovoltaic shutdown device, where the apparatus 300 for debugging a photovoltaic shutdown device includes:
a transmitter 301, configured to: receive a binding instruction, broadcast the binding instruction, to receive a communication address that corresponds to a number of a shutdown device and that is transmitted by the shutdown device in response to the binding instruction, and construct a shutdown device list according to the number of the shutdown device and the corresponding communication address, to complete a shutdown device binding operation; and transmit a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device.

Each transmitter (transmit) may be bound to a plurality of shutdown devices. The transmitter is configured to receive monitoring data (including a temperature, a voltage value, a current value, and the like) transmitted by the shutdown devices and forward the monitoring data to a client corresponding to a photovoltaic power generation system. A running status of a photovoltaic component corresponding to each shutdown device may be more intuitively displayed by using the client. In some embodiments, the binding instruction may be transmitted to the transmitter by using the client, and the transmitter broadcasts a received binding instruction, to receive the communication address that corresponds to the number of the shutdown device and that is returned by the shutdown device in response to the binding instruction. Therefore, binding of a plurality of shutdown devices is completed at the transmitter end, so that effective control and shutdown function debugging are subsequently performed on the shutdown devices that have completed binding. Further, monitoring data of a photovoltaic component corresponding to each shutdown device that has completed binding may be intuitively and accurately learned, thereby facilitating operations such as system maintenance.

In some embodiments, the transmitter 301 is further configured to: broadcast the binding instruction through a preset port, so that the shutdown device receives the binding instruction through the preset port, performs a first modulo operation on the number of the shutdown device, to obtain a first modulo value, determines, based on the first modulo value and a communication address list, the communication address corresponding to the number of the shutdown device, and transmits the communication address corresponding to the number of the shutdown device.

In a modulo operation provided in this embodiment of the present application, a value of a modulus is greater than or equal to a threshold quantity of shutdown devices that may be bound to the transmitter. The shutdown device determines that a communication address corresponding to a case in which a sequence number of a communication address in the communication address list is consistent with the first modulo value is the communication address corresponding to the number of the shutdown device, and transmits both the communication address and the number of the shutdown device to the transmitter end. The transmitter end constructs the shutdown device list according to the communication address and the number of the shutdown device, and records, in the list, the number of the shutdown device that has completed binding and the corresponding communication address.

In some embodiments, after the step of receiving a communication address that corresponds to a number of a shutdown device and that is transmitted by the shutdown device in response to the binding instruction, the transmitter 301 is further configured to: transmit a successful binding instruction or an unsuccessful binding instruction to the shutdown device, so that: the shutdown device performs, in response to the successful binding instruction, marking processing on the bound communication address in the communication address list; or the shutdown device generates, in response to the unsuccessful binding instruction, a random number, performs a second modulo operation on the random number, to obtain a second modulo value, determines, based on the second modulo value and the communication address list, the communication address corresponding to the number of the shutdown device, and transmits the communication address corresponding to the number of the shutdown device.

The first modulo operation is performed according to the number of the shutdown device, and finally a plurality of shutdown devices may obtain a same first modulo value. Further, a same communication address is determined. The transmitter records only information about the first obtained communication address, that is, if it has been recorded in the shutdown device list that a communication address has a corresponding number of a shutdown device, for a number of a shutdown device corresponding to the same communication address that is transmitted later, the transmitter transmits an unsuccessful binding instruction, so that a shutdown device that receives the unsuccessful binding instruction randomly generates a random number, performs a second modulo operation to obtain a second modulo value, re-determines a communication address corresponding to a number of the shutdown device, and transmits the re-determined communication address to the transmitter end to perform a binding operation. Through the foregoing setting, the following case is avoided: a plurality of numbers of shutdown devices correspond to a same communication address, resulting in an exception in a result of subsequent shutdown function debugging, which further improves a targeted control effect and a function debugging effect of a shutdown device.

In some embodiments, the transmitter 301 terminates the binding operation when a quantity of times of transmitting a communication address by any shutdown device meets a threshold quantity of times, or a quantity of target shutdown devices in the shutdown device list reaches a threshold quantity of shutdown devices.

Through the foregoing setting, a constraint condition for terminating the binding operation is set, which is conducive to improving function debugging efficiency.

In some embodiments, the transmitter is further configured to: transmit the shutdown device list and/or the shutdown function debugging result to a client, to display, by using the client, the shutdown device list bound to the transmitter and/or the shutdown function debugging result of the target shutdown device.

A communication connection is established between the transmitter and the client provided in this embodiment of the present application. The transmitter transmits, to the client, a list of shutdown devices successfully bound to the transmitter and a shutdown function detection result corresponding to the target shutdown device in the shutdown device list. A user or a maintenance person may intuitively learn, by using the client display device, a running status of the bound shutdown devices.

In some embodiments, the transmitter is further configured to: transmit a monitoring data acquisition instruction to the target shutdown device in the shutdown device list, to receive monitoring data transmitted by the target shutdown device, and determine, based on the monitoring data, a running status of a photovoltaic component corresponding to the target shutdown device.

Through the foregoing setting, an operator may intuitively learn, by using the client display device, a running status of photovoltaic components corresponding to the bound shutdown devices. When a photovoltaic component is faulty, a maintenance operation may be performed quickly and accurately, thereby reducing maintenance difficulty and a maintenance time, and further promoting popularization of the photovoltaic power generation system.

A shutdown device 302 is configured to: receive the binding instruction broadcast by the transmitter, and transmit, to the transmitter, the communication address corresponding to the number of the shutdown device; and receive the shutdown function debugging instruction transmitted by the transmitter, disconnect from a corresponding photovoltaic component according to the shutdown function debugging instruction, and transmit, to the transmitter, a monitored current value after the disconnection.

In some embodiments, shutdown devices in the shutdown device list are all shutdown devices that have been successfully bound at the transmitter end. Therefore, a shutdown function debugging instruction may be transmitted to each shutdown device in sequence, or shutdown function debugging instruction may be selectively transmitted to some of the shutdown devices, or shutdown function debugging instructions may be simultaneously transmitted to all the shutdown devices in the shutdown device list. Through the foregoing setting, targeted control of the photovoltaic power generation system on the shutdown devices is improved, targeted function debugging on each shutdown device is implemented, and safety risks are reduced.

According to the foregoing apparatus for debugging a photovoltaic shutdown device provided in this embodiment of the present application, a transmitter is configured to: receive a binding instruction, broadcast the binding instruction, to receive a communication address that corresponds to a number of a shutdown device and that is transmitted by the shutdown device in response to the binding instruction, and construct a shutdown device list according to the number of the shutdown device and the corresponding communication address, to complete a shutdown device binding operation; and transmit a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device; and a shutdown device is configured to: receive the binding instruction broadcast by the transmitter, and transmit, to the transmitter, the communication address corresponding to the number of the shutdown device; and receive the shutdown function debugging instruction transmitted by the transmitter, disconnect from a corresponding photovoltaic component according to the shutdown function debugging instruction, and transmit, to the transmitter, a monitored current value after the disconnection. Therefore, the following technical problem is resolved: the photovoltaic power generation system in the related technology cannot effectively control each shutdown device, and therefore cannot perform function debugging on each shutdown device. Consequently, a safety risk of the existing photovoltaic power generation system is relatively large. In addition, when a fault occurs, a node on which the fault occurs cannot be accurately and quickly determined, thereby increasing maintenance difficulty and a maintenance time, which is not conducive to popularization of the photovoltaic power generation system. This implements the following technical effects: targeted control and shutdown function debugging of a shutdown device is achieved, thereby reducing safety risks, reducing system maintenance difficulty and a maintenance time, and expanding applicable scenarios of the photovoltaic power generation system.

An embodiment of the present application further provides a photovoltaic power generation system, including at least one processor and a memory communicatively connected to the at least one processor. The memory stores a computer program that can be executed by the at least one processor. When being executed by the at least one processor, the computer program is used to cause the electronic device to execute a method in embodiments of the present application.

An embodiment of the present application further provides a non-transitory machine-readable medium storing a computer program. When being executed by a processor of a computer, the computer program is used to cause the computer to execute a method in embodiments of the present application.

An embodiment of the present application further provides a computer program product, including a computer program. When being executed by a processor of a computer, the computer program is used to cause the computer to execute a method in embodiments of the present application.

Referring to FIG. 4, a block diagram of a structure of an electronic device that may serve as a server or a client of embodiments of the present application is now described, which is an example of a hardware device that may be applied to various aspects of the present application. The electronic device is intended to represent various forms of digital electronic computer devices, such as a laptop computer, a desktop computer, a workstation, a personal digital assistant, a server, a blade server, a mainframe computer, and other suitable computers. Electronic devices may also represent various forms of mobile devices, such as personal digital processing, cellular phones, smart phones, wearable devices, and other similar computing devices. The components, connections and relationships thereof, and functions thereof shown herein are merely examples and are not intended to limit implementation of the present application described and/or claimed herein.

As shown in FIG. 4, the electronic device includes a computing unit 401, which may execute various appropriate actions and processing according to a computer program stored in a read-only memory (ROM) 402 or a computer program loaded from a storage unit 408 to a random access memory (RAM) 403. The RAM 403 may further store various programs and data required for the operation of the electronic device. The computing unit 401, the ROM 402, and the RAM 403 are connected to each other through a bus 404. An input/output (I/O) interface 405 is also connected to the bus 404.

A plurality of components in the electronic device are connected to the I/O interface 405, including: an input unit 406, an output unit 407, a storage unit 408, and a communications unit 409. The input unit 406 may be any type of device capable of entering information into the electronic device. The input unit 406 may receive entered digit or character information, and generate a key signal input related to user settings and/or function control of the electronic device. The output unit 407 may be any type of device capable of presenting information, and may include, but is not limited to, a display, a speaker, a video/audio output terminal, a vibrator, and/or a printer. The storage unit 408 may include, but is not limited to, a magnetic disk and an optical disc. The communications unit 409 allows the electronic device to exchange information/data with other devices through a computer network such as the Internet and/or various telecommunications networks, and may include, but is not limited to, a modem, a network interface card, an infrared communications device, a wireless communications transceiver, and/or a chipset, for example, a Bluetooth device, a Wi-Fi device, a WiMAX device, or a cellular communications device.

The computing unit 401 may be various general-purpose and/or special-purpose processing components with processing and computing capabilities. Some examples of the computing unit 401 include, but are not limited to, a CPU, a graphics processing unit (GPU), various dedicated artificial intelligence (AI) computing chips, various computing units that run machine learning model algorithms, a digital signal processor (DSP), and any appropriate processor, controller, microcontroller, and the like. The computing unit 401 executes the various methods and processing described above. For example, in some embodiments, the method embodiments of the present application may be implemented as a computer program, which is tangibly contained in a machine-readable medium, such as the storage unit 408. In some embodiments, a part or all of the computer program may be loaded and/or installed onto the electronic device via the ROM 402 and/or the communications unit 409. In some embodiments, the computing unit 401 may be configured, by any other appropriate means (for example, by means of firmware), to execute the foregoing methods.

The computer program used to implement a method in embodiments of the present application may be written in any combination of one or more programming languages. These computer programs may be provided for a processor or a controller of a general-purpose computer, a special-purpose computer, or other programmable data processing apparatuses, such that when the computer programs are executed by the processor or the controller, the functions or operations specified in the flowcharts and/or block diagrams are implemented. The computer programs may be completely executed on a machine, or partially executed on a machine, or may be, as an independent software package, partially executed on a machine and partially executed on a remote machine, or completely executed on a remote machine or a server.

In the context of embodiments of the present application, a machine-readable medium may be a tangible medium that may contain or store a program for use by or in conjunction with an instruction execution system, apparatus, or device. A machine-readable medium may be a machine-readable signal medium or a machine-readable storage medium. The machine-readable signal medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

It should be noted that the term "including" and its variations used in embodiments of the present application are open words, indicating "including but not limited to". The term "based on" is "at least partially based on". The term "an embodiment" means "at least one embodiment"; the term "another embodiment" means "at least one another embodiment"; and the term "some embodiments" means "at least some embodiments". The modifiers "one" and "a plurality of" mentioned in embodiments of the present application are illustrative and not restrictive, and those skilled in the art should understand that unless the context clearly indicates otherwise, the modifiers should be understood as "one or more".

Various steps described in the method implementations of embodiments of the present application may be executed in different orders, and/or executed in parallel. Furthermore, additional steps may be included and/or the execution of the illustrated steps may be omitted in the method implementations.

The word "embodiment" means in this specification that the specific features, structures, or characteristics described in conjunction with the embodiments may be encompassed in at least one embodiment of the present application. The phrase at various locations in this specification does not necessarily refer to the same embodiment, or an independent or alternative embodiment exclusive of another embodiment. All the embodiments in this specification are described in a related manner. For same or similar parts in the embodiments, mutual reference may be made. Especially, apparatus, device, and system embodiments are basically similar to the method embodiments, and therefore are described briefly. Refer to partial descriptions in the method embodiments for related parts.

The foregoing embodiments describe only several implementations of the present application, and the descriptions are relatively specific and detailed, but should not be understood as a limitation to the protection scope. Therefore, the protection scope of the present application shall be subject to the appended claims.

## Claims

1. A method for debugging a photovoltaic shutdown device, **characterized by** comprising:
receiving (S101) a binding instruction, broadcasting the binding instruction, to receive a communication address that corresponds to a number of a shutdown device and that is transmitted by the shutdown device in response to the binding instruction, and constructing a shutdown device list according to the number of the shutdown device and the corresponding communication address, to complete a shutdown device binding operation; and
transmitting (S102) a shutdown function debugging instruction to a target shutdown device in the shutdown device list, so that the target shutdown device disconnects from a corresponding photovoltaic component according to the shutdown function debugging instruction, receives a monitored current value transmitted by the target shutdown device, and determines, based on the monitored current value, a shutdown function debugging result of the target shutdown device.

2. The debugging method according to claim 1, wherein the step of broadcasting the binding instruction, to receive a communication address that corresponds to a number of a shutdown device and that is transmitted by the shutdown device in response to the binding instruction comprises:
broadcasting the binding instruction through a preset port, so that the shutdown device receives the binding instruction through the preset port, performs a first modulo operation on the number of the shutdown device, to obtain a first modulo value, determines, based on the first modulo value and a communication address list, the communication address corresponding to the number of the shutdown device, and transmits the communication address corresponding to the number of the shutdown device.

3. The debugging method according to claim 2, wherein after the step of receiving a communication address that corresponds to a number of a shutdown device and that is transmitted by the shutdown device in response to the binding instruction, the method further comprises:
transmitting a successful binding instruction or an unsuccessful binding instruction to the shutdown device, so that:
the shutdown device performs, in response to the successful binding instruction, marking processing on the bound communication address in the communication address list; or
the shutdown device generates, in response to the unsuccessful binding instruction, a random number, performs a second modulo operation on the random number, to obtain a second modulo value, determines, based on the second modulo value and the communication address list, the communication address corresponding to the number of the shutdown device, and transmits the communication address corresponding to the number of the shutdown device.

4. The debugging method according to claim 3, wherein the method further comprises:
terminating the binding operation when a quantity of times of transmitting a communication address by any shutdown device meets a threshold quantity of times, or a quantity of target shutdown devices in the shutdown device list reaches a threshold quantity of shutdown devices.

5. The debugging method according to claim 2, wherein the method is applied to a transmitter, and a threshold quantity of shutdown devices bound to the transmitter is less than or equal to a value of a modulus in a modulo operation.

6. The debugging method according to claim 1, wherein the method further comprises:
transmitting the shutdown device list and/or the shutdown function debugging result to a client, to display, by using the client, the shutdown device list bound to the transmitter and/or the shutdown function debugging result of the target shutdown device.

7. The debugging method according to claim 1, wherein the method further comprises:
transmitting a monitoring data acquisition instruction to the target shutdown device in the shutdown device list, to receive monitoring data transmitted by the target shutdown device, and determining, based on the monitoring data, a running status of a photovoltaic component corresponding to the target shutdown device.

8. An apparatus (300) for debugging a photovoltaic shutdown device, **characterized in that** the apparatus comprises a transmitter (310) and a shutdown device (320), wherein
the transmitter (310) is configured to: receive a binding instruction, broadcast the binding instruction, to receive a communication address that corresponds to a number of a shutdown device (320) and that is transmitted by the shutdown device (320) in response to the binding instruction, and construct a shutdown device (320) list according to the number of the shutdown device (320) and the corresponding communication address, to complete a shutdown device (320) binding operation; and transmit a shutdown function debugging instruction to a target shutdown device (320) in the shutdown device (320) list, so that the target shutdown device (320) disconnects from a corresponding photovoltaic component according to the shutdown function debugging instruction, receives a monitored current value transmitted by the target shutdown device (320), and determines, based on the monitored current value, a shutdown function debugging result of the target shutdown device (320); and
the shutdown device (320) is configured to: receive the binding instruction broadcast by the transmitter (310), and transmit, to the transmitter (310), the communication address corresponding to the number of the shutdown device (320); and receive the shutdown function debugging instruction transmitted by the transmitter (310), disconnect from a corresponding photovoltaic component according to the shutdown function debugging instruction, and transmit, to the transmitter (310), a monitored current value after the disconnection.

9. A photovoltaic power generation system, **characterized by** comprising: a processor and a memory storing a program, wherein the program comprises instructions, and the instructions, when being executed by the processor, cause the processor to execute the method according to any one of claims 1 to 7.

10. A non-transitory machine-readable medium storing computer instructions, **characterized in that** the computer instructions are used to cause a computer to execute the method according to any one of claims 1 to 7.

## Patentansprüche

1. Verfahren zur Fehlerbeseitigung einer Photovoltaik-Abschaltvorrichtung, **dadurch gekennzeichnet, dass** es Folgendes umfasst:
Empfangen (S101) einer Bindungsanweisung, Senden der Bindungsanweisung, um eine Kommunikationsadresse zu empfangen, die einer Nummer einer Abschaltvorrichtung entspricht und die von der Abschaltvorrichtung als Reaktion auf die Bindungsanweisung übertragen wird, und Erstellen einer Abschaltvorrichtungsliste gemäß der Nummer der Abschaltvorrichtung und der entsprechenden Kommunikationsadresse, um eine Bindungsoperation der Abschaltvorrichtung abzuschließen; und
Übertragen (S102) einer Abschaltfunktions-Fehlerbeseitigungsanweisung an eine Ziel-Abschaltvorrichtung in der Abschaltvorrichtungsliste, so dass sich die Ziel-Abschaltvorrichtung gemäß der Abschaltfunktions-Fehlerbeseitigungsanweisung von einer entsprechenden Photovoltaikkomponente trennt, ein überwachter Stromwert empfangen wird, der von der Ziel-Abschaltvorrichtung übertragen wird, und basierend auf dem überwachten Stromwert ein Abschaltfunktions-Fehlerbeseitigungsergebnis der Ziel-Abschaltvorrichtung bestimmt wird.

2. Verfahren zur Fehlerbeseitigung nach Anspruch 1, wobei der Schritt des Sendens der Bindungsanweisung, um eine Kommunikationsadresse zu empfangen, die einer Nummer einer Abschaltvorrichtung entspricht und die von der Abschaltvorrichtung als Reaktion auf die Bindungsanweisung übertragen wird, Folgendes umfasst:
Senden der Bindungsanweisung über einen vordefinierten Port, so dass die Abschaltvorrichtung die Bindungsanweisung über den vordefinierten Port empfängt, eine erste Modulo-Operation an der Nummer der Abschaltvorrichtung ausführt, um einen ersten Modulo-Wert zu erhalten, basierend auf dem ersten Modulo-Wert und einer Kommunikationsadressliste die der Nummer der Abschaltvorrichtung entsprechende Kommunikationsadresse bestimmt und die der Nummer der Abschaltvorrichtung entsprechende Kommunikationsadresse überträgt.

3. Verfahren zur Fehlerbeseitigung nach Anspruch 2, wobei das Verfahren nach dem Schritt des Empfangens einer Kommunikationsadresse, die einer Nummer einer Abschaltvorrichtung entspricht und die von der Abschaltvorrichtung als Reaktion auf die Bindungsanweisung übertragen wird, ferner Folgendes umfasst:
Übertragen einer erfolgreichen Bindungsanweisung oder einer nicht erfolgreichen Bindungsanweisung an die Abschaltvorrichtung, so dass:
die Abschaltvorrichtung als Reaktion auf die erfolgreiche Bindungsanweisung eine Markierungsverarbeitung für die gebundene Kommunikationsadresse in der Kommunikationsadressliste durchführt; oder
die Abschaltvorrichtung als Reaktion auf die nicht erfolgreiche Bindungsanweisung eine Zufallszahl erzeugt, eine zweite Modulo-Operation an der Zufallszahl durchführt, um einen zweiten Modulo-Wert zu erhalten, basierend auf dem zweiten Modulo-Wert und der Kommunikationsadressliste die der Nummer der Abschaltvorrichtung entsprechende Kommunikationsadresse bestimmt und die der Nummer der Abschaltvorrichtung entsprechende Kommunikationsadresse überträgt.

4. Verfahren zur Fehlerbeseitigung nach Anspruch 3, wobei das Verfahren ferner Folgendes umfasst:
Beenden der Bindungsoperation, wenn eine Anzahl von Malen der Übertragung einer Kommunikationsadresse durch eine beliebige Abschaltvorrichtung eine Schwellenanzahl von Malen erfüllt, oder eine Anzahl von Ziel-Abschaltvorrichtungen in der Abschaltvorrichtungsliste eine Schwellenanzahl von Abschaltvorrichtungen erreicht.

5. Verfahren zur Fehlerbeseitigung nach Anspruch 2, wobei das Verfahren auf einen Sender angewendet wird und eine Schwellenanzahl von an den Sender gebundenen Abschaltvorrichtungen kleiner oder gleich einem Wert eines Modulus in einer Modulo-Operation ist.

6. Verfahren zur Fehlerbeseitigung nach Anspruch 1, wobei das Verfahren ferner Folgendes umfasst:
Übertragen der Abschaltvorrichtungsliste und/oder des Abschaltfunktions-Fehlerbeseitigungsergebnisses an einen Client, um unter Verwendung des Clients die an den Sender gebundene Abschaltvorrichtungsliste und/oder das Abschaltfunktions-Fehlerbeseitigungsergebnis der Ziel-Abschaltvorrichtung anzuzeigen.

7. Verfahren zur Fehlerbeseitigung nach Anspruch 1, wobei das Verfahren ferner Folgendes umfasst:
Übertragen einer Überwachungsdaten-Erfassungsanweisung an die Ziel-Abschaltvorrichtung in der Abschaltvorrichtungsliste, um durch die Ziel-Abschaltvorrichtung übertragene Überwachungsdaten zu empfangen, und Bestimmen, basierend auf den Überwachungsdaten, eines Betriebsstatus einer der Ziel-Abschaltvorrichtung entsprechenden Photovoltaikkomponente.

8. Einrichtung (300) zur Fehlerbeseitigung einer Photovoltaik-Abschaltvorrichtung, **dadurch gekennzeichnet, dass** die Einrichtung einen Sender (310) und eine Abschaltvorrichtung (320) umfasst, wobei
der Sender (310) zu Folgendem eingerichtet ist: Empfangen einer Bindungsanweisung, Senden der Bindungsanweisung, um eine Kommunikationsadresse zu empfangen, die einer Nummer einer Abschaltvorrichtung (320) entspricht und die von der Abschaltvorrichtung (320) als Reaktion auf die Bindungsanweisung übertragen wird, und Erstellen einer Liste der Abschaltvorrichtungen (320) gemäß der Nummer der Abschaltvorrichtung (320) und der entsprechenden Kommunikationsadresse, um eine Bindungsoperation der Abschaltvorrichtung (320) abzuschließen; und Übertragen einer Abschaltfunktions-Fehlerbeseitigungsanweisung an eine Ziel-Abschaltvorrichtung (320) in der Liste der Abschaltvorrichtungen (320), so dass sich die Ziel-Abschaltvorrichtung (320) gemäß der Abschaltfunktions-Fehlerbeseitigungsanweisung von einer entsprechenden Photovoltaikkomponente trennt, ein überwachter Stromwert empfangen wird, der von der Ziel-Abschaltvorrichtung (320) übertragen wird, und basierend auf dem überwachten Stromwert ein Abschaltfunktions-Fehlerbeseitigungsergebnis der Ziel-Abschaltvorrichtung (320) bestimmt wird; und
die Abschaltvorrichtung (320) zu Folgendem eingerichtet ist: Empfangen der vom Sender (310) gesendeten Bindungsanweisung und Übertragen der Kommunikationsadresse, die der Nummer der Abschaltvorrichtung (320) entspricht, an den Sender (310); und Empfangen der vom Sender (310) übertragenen Abschaltfunktions-Fehlerbeseitigungsanweisung, Trennen von einer entsprechenden Photovoltaikkomponente gemäß der Abschaltfunktions-Fehlerbeseitigungsanweisung und Übertragen eines überwachten Stromwerts an den Sender (310) nach der Trennung.

9. Photovoltaik-Stromerzeugungssystem, **dadurch gekennzeichnet, dass** es Folgendes umfasst: einen Prozessor und einen Speicher, der ein Programm speichert, wobei das Programm Anweisungen umfasst und die Anweisungen, wenn sie vom Prozessor ausgeführt werden, den Prozessor dazu veranlassen, das Verfahren nach einem der Ansprüche 1 bis 7 auszuführen.

10. Nichtflüchtiges, maschinenlesbares Medium, das Computeranweisungen speichert, **dadurch gekennzeichnet, dass** die Computeranweisungen dazu verwendet werden, einen Computer dazu zu veranlassen, das Verfahren nach einem der Ansprüche 1 bis 7 auszuführen.

## Revendications

1. Procédé de débogage d'un dispositif de coupure photovoltaïque, **caractérisé en ce qu'**il comprend :
la réception (S101) d'une instruction de liaison, la diffusion de l'instruction de liaison, afin de recevoir une adresse de communication correspondant à un numéro d'un dispositif de coupure et transmise par le dispositif de coupure en réponse à l'instruction de liaison, et la construction d'une liste de dispositifs de coupure selon le numéro du dispositif de coupure et l'adresse de communication correspondante, afin de compléter une opération de liaison de dispositif de coupure ; et
la transmission (S102) d'une instruction de débogage de fonction de coupure à un dispositif de coupure cible de la liste de dispositifs de coupure, afin que le dispositif de coupure cible se déconnecte d'un composant photovoltaïque correspondant selon l'instruction de débogage de fonction de coupure, et que l'émetteur reçoive une valeur surveillée de courant transmise par le dispositif de coupure cible et détermine, d'après la valeur surveillée de courant, un résultat de débogage de fonction de coupure du dispositif de coupure cible.

2. Procédé de débogage selon la revendication 1, dans lequel l'étape de diffusion de l'instruction de liaison, afin de recevoir une adresse de communication correspondant à un numéro d'un dispositif de coupure et transmise par le dispositif de coupure en réponse à l'instruction de liaison, comprend :
la diffusion de l'instruction de liaison par un port prédéfini, afin que le dispositif de coupure reçoive l'instruction de liaison par le port prédéfini, effectue une première opération modulo sur le numéro du dispositif de coupure pour obtenir une première valeur modulo, détermine, d'après la première valeur modulo et une liste d'adresses de communication, l'adresse de communication correspondant au numéro du dispositif de coupure, et transmette l'adresse de communication correspondant au numéro du dispositif de coupure.

3. Procédé de débogage selon la revendication 2, dans lequel, après l'étape de réception d'une adresse de communication qui correspond à un numéro d'un dispositif de coupure et qui est transmise par le dispositif de coupure en réponse à l'instruction de liaison, le procédé comprend en outre :
la transmission d'une instruction de liaison réussie ou d'une instruction de liaison non réussie au dispositif de coupure, afin que :
le dispositif de coupure effectue, en réponse à l'instruction de liaison réussie, un traitement de marquage sur l'adresse de communication liée de la liste d'adresses de communication ; ou
le dispositif de coupure génère, en réponse à l'instruction de liaison non réussie, un nombre aléatoire, effectue une seconde opération modulo sur le nombre aléatoire pour obtenir une seconde valeur modulo, détermine, d'après la seconde valeur modulo et la liste d'adresses de communication, l'adresse de communication correspondant au numéro du dispositif de coupure, et transmette l'adresse de communication correspondant au numéro du dispositif de coupure.

4. Procédé de débogage selon la revendication 3, dans lequel le procédé comprend en outre :
la fin de l'opération de liaison lorsqu'un nombre de fois où un dispositif de coupure quelconque transmet une adresse de communication atteint un nombre seuil de fois, ou lorsqu'un nombre de dispositifs de coupure cibles de la liste de dispositifs de coupure atteint un nombre seuil de dispositifs de coupure.

5. Procédé de débogage selon la revendication 2, dans lequel le procédé est appliqué à un émetteur et un nombre seuil de dispositifs de coupure liés à l'émetteur est inférieur ou égal à la valeur d'un module lors d'une opération modulo.

6. Procédé de débogage selon la revendication 1, dans lequel le procédé comprend en outre :
la transmission de la liste de dispositifs de coupure et/ou du résultat de débogage de fonction de coupure à un client, afin d'afficher, par le biais du client, la liste de dispositifs de coupure liée à l'émetteur et/ou le résultat de débogage de fonction de coupure du dispositif de coupure cible.

7. Procédé de débogage selon la revendication 1, dans lequel le procédé comprend en outre :
la transmission d'une instruction d'acquisition de données de surveillance au dispositif de coupure cible de la liste de dispositifs de coupure, afin de recevoir les données de surveillance transmises par le dispositif de coupure cible, et la détermination, d'après les données de surveillance, d'un état de fonctionnement d'un composant photovoltaïque correspondant au dispositif de coupure cible.

8. Appareil (300) de débogage d'un dispositif de coupure photovoltaïque, **caractérisé en ce que** l'appareil comprend un émetteur (310) et un dispositif de coupure (320), dans lequel
l'émetteur (310) est configuré : pour recevoir une instruction de liaison, pour diffuser l'instruction de liaison, pour recevoir une adresse de communication correspondant à un numéro d'un dispositif de coupure (320) et transmise par le dispositif de coupure (320) en réponse à l'instruction de liaison, et pour construire une liste de dispositifs de coupure (320) selon le numéro du dispositif de coupure (320) et l'adresse de communication correspondante, afin de compléter une opération de liaison de dispositif de coupure (320) ; et pour transmettre une instruction de débogage de fonction de coupure à un dispositif de coupure cible (320) de la liste de dispositifs de coupure (320), afin que le dispositif de coupure cible (320) se déconnecte d'un composant photovoltaïque correspondant selon l'instruction de débogage de fonction de coupure, et que l'émetteur (310) reçoive une valeur surveillée de courant transmise par le dispositif de coupure cible (320) et détermine, d'après la valeur surveillée de courant, un résultat de débogage de fonction de coupure du dispositif de coupure cible (320) ; et
le dispositif de coupure (320) est configuré : pour recevoir l'instruction de liaison diffusée par l'émetteur (310) et pour transmettre à l'émetteur (310) l'adresse de communication correspondant au numéro du dispositif de coupure (320) ; et pour recevoir l'instruction de débogage de fonction de coupure transmise par l'émetteur (310), pour se déconnecter d'un composant photovoltaïque correspondant selon l'instruction de débogage de fonction de coupure et pour transmettre à l'émetteur (310) une valeur surveillée de courant après la déconnexion.

9. Système de production d'énergie photovoltaïque, **caractérisé en ce qu'**il comprend : un processeur et une mémoire stockant un programme, dans lequel le programme comprend des instructions et les instructions, lorsqu'elles sont exécutées par le processeur, amènent le processeur à exécuter le procédé selon l'une quelconque des revendications 1 à 7.

10. Support non transitoire lisible par machine stockant des instructions informatiques, **caractérisé en ce que** les instructions informatiques servent à amener un ordinateur à exécuter le procédé selon l'une quelconque des revendications 1 à 7.
